Europäisches Patentamt

European Patent Office

Office européen des brevets

(11) Veröffentlichungsnummer: **0 377 236**

**A1**

(12) **EUROPÄISCHE PATENTANMELDUNG**

(21) Anmeldenummer: **89202955.4**

(22) Anmeldetag: **21.11.89**

(51) Int. Cl.⁵· **F16L 3/133**

(30) Priorität: **21.12.88 NL 8803130**

(43) Veröffentlichungstag der Anmeldung:
**11.07.90 Patentblatt 90/28**

(84) Benannte Vertragsstaaten:
**AT BE CH DE ES FR GB GR IT LI LU NL SE**

(71) Anmelder: **J.H. DE WIT EN ZONEN B.V.**
**Kanaaldijk Z.O. 12b**
**NL-5705 AB Helmond(NL)**

(72) Erfinder: **Thoolen, Wilhelm Fransiscus**
**Schaapsweg 2B**
**NL-6077 CG St. Odilienberg(NL)**

(74) Vertreter: **de Bruijn, Leendert C. et al**
**Nederlandsch Octrooibureau**
**Scheveningseweg 82 P.O. Box 29720**
**NL-2502 LS 's-Gravenhage(NL)**

(54) **Befestigungsvorrichtung für Rohre.**

(57) Befestigungsvorrichtung für Rohre an einer Wand oder Decke mit einer Klemmschelle (1) zum Aufnehmen des Rohres (5) und einem an der Wand oder Decke zu befestigenden Stift (3) dessen freies Ende von einem Kopf und von einem kurzen Gewinde direkt unterhalb des Kopfes versehen ist und wessen Schaft einen Durchmesser hat der höchstens dem Kerndurchmesser des Gewindes gleich ist. Die Schelle trägt zwei parallel zueinanderlaufende schalenförmige Zungen (12) welche bei montierter Vorrichtung den Kopf zwischen sich aufnehmen, und am Ende jeder Zunge eine zum Stift hin und quer dazu gerichtete Lippe (13). In jeder Lippe ist ein Schlitzloch (14, 15) vorgesehen mit einer Bohrung welche das Gewinde des Stiftes gerade aufnehmen kann und einer von der Zunge weglaufenden Schlitzöffnung welche gerade den Schaft des Stiftes durchlassen kann aber nicht das Gewinde. Am Stift ist eine im Wesen zylindrische Klemmbuchse (4) montiert, mit geschlossenem wandseitigem Ende und zentraler Gewindebohrung womit die Buchse auf dem Gewinde über die Lippen die Zungen gegen die Rückseite des Kopfes anziehen kann um die Schelle fest am Stift zu verankern. Der Stift kann in der Nähe der Mauer oder Decke noch ein kurzes gleichartiges Gewinde (35) tragen zur Lagerung der Buchse während der Montage und des Transportes. Gewisse Vormontagen sind mit einbegriffen.

fig-1a

fig-1b

## Befestigungsvorrichtung für Rohre.

Die Erfindung betrifft eine Befestigungsvorrichtung für Rohre und dergleichen, welche Vorrichtung besteht aus:
- einer das zu befestigende Rohr oder dergleichen aufnehmende Schelle, deren beiden umgesetzten Enden in Form schalenförmiger Zungen sich im wesentlichen Parallel zueinander in radialer Richtung gegenüber der Schelle erstrecken, wobei das Ende jeder Zunge mit einem Einschlußmittel versehen ist;
- einem mit dem einen Ende in der Grundkonstruktion, wie einer Wand oder einer Decke, zu befestigenden Stift, dessen anderes Ende mit Gewinde und mit einer mit den Einschlußmitteln an den Zungen zusammenwirkenden Verdickung versehen ist, und
- einer im wesentlichen zylindrischen Klemmbuchse, die über die mit ihrem Einschlußmittel an die Verdickung anliegenden Zungen mit einigem Spiel aufsetzbar ist.

Vorrichtungen des vorstehend beschriebenen Typs sind aus der amerikanischen Patentschrift 4.306.696 bekannt. Die in dieser Veröffentlichung beschriebene Befestigungsvorrichtung für Rohre verwendet eine verschiebbare Klemmbuchse, die als loser Teil angewandt wird. Zusammen mit verschiedenen anderen bekannten Vorrichtungen hat auch die beschriebene Vorrichtung den Nachteil, daß während der Montage, bei der der Monteur beide Hände braucht, um die Schelle um das Rohr anzubringen, die Klemmbuchse von dem Stift abschieben kann, fallen und sogar verlorengehen kann. Dies gilt namentlich bei der Befestigung von Rohren an einer Decke. Es ist bekannt, daß, um die Wände eines Raums für andere Vorrichtungen oder Geräte frei zu halten, Rohre und dergleichen vorzugsweise an Decken aufgehängt werden. Eine ähnliche Konstruktion ist aus der deutschen Offenlegungsschrift 2.746.52 bekannt. Aus Figur 2 dieser Veröffentlichung ist eine häufig angewandte Klemmschelle bekannt, welche mit ihren innenseitig von Gewinde versehenen schalenförmigen Zungen auf das Gewinde-Ende des Stifts aufgesetzt wird und danach wieder mit einer losen, ein wenig konischen Klemmbuchse auf dem Stift festgeklemmt werden kann. Auch hier ergibt sich der Nachteil, daß die Klemmbuchse ein loser Teil ist, wodurch die Montage erheblich erschwert wird.

Ein weiterer Nachteil der bekannten Vorrichtungen kommt vor allem im Baugewerbe zum Ausdruck, wo diese Art von Vorrichtungen vorwiegend angewendet werden. Der Hersteller der betroffenen Befestigungsvorrichtungen mag denn schon die Schelle zusammen mit dem Stift und der Klemmbuchse lose vormontiert in Verpackungen liefern;

während der Montage im Bau muß diese Vormontage wieder auseinandergenommen werden und bildet dabei wenigstens drei lose Bauteile. Fallenlassen, Verlorengehen von Teilen und unvollständige Befestigungsvorrichtungen sind dann die Folge und erfordern einen verhältnismäßig hohen Zeitaufwand für Korrektur und Reparatur.

Die Erfindung bezweckt die Vermeidung der beiden vorgenannten Nachteile. Zu diesem Zweck wird die eingangs umschriebene erfindungsgemäße Befestigungsvorrichtung dadurch gekennzeichnet:
- daß der Stift zwischen dem in der Wand zu befestigenden Teil und dem anderen mit Gewinde versehenen Ende einen zylindrischen Mittelteil aufweist, dessen Durchmesser (B) gleich oder kleiner ist als der Kerndurchmesser des Gewindes,
- daß die Verdickung an dem gewindeseitigen Ende des Stifts durch einen mit dem Stift integralen Kopf gebildet wird, der mit einem gewissen Spiel zwischen die beiden schalenförmigen Zungen paßt,
- daß die Klemmbuchse wandseitig ein geschlossenes Ende mit einer zentralen Bohrung aufweist, in der mit dem Gewinde-Ende des Stifts übereinstimmendes Gewinde vorgesehen ist, und
- daß das Einschlußmittel am Ende jeder Zunge aus einer der anderen Zunge zugewandten, in einer senkrecht zu der Achslinie der gesamten Vorrichtung stehenden Ebene gelegenen umgesetzten Lippe besteht, deren Außenumfang ein wenig kleiner als der Innendurchmesser der Klemmbuchse ist und in der ein derartiges Schlitzloch angebracht worden ist, daß das Zentrum des Teils mit dem größeren Durchmesser (C) mit der Achslinie zusammenfällt und einen Durchmesser (C) hat, der etwas größer als der Außendurchmesser (A) des Gewindes ist, und wobei für die Breite der Schlitzöffnung (D) gilt B < D < A und daß diese Schlitz-Öffnung der entsprechenden Zunge abgewandt verläuft.

Dank der obengenannten Kennzeichen ist es einerseits möglich, die Klemmbuchse von dem mit Gewinde versehenen Ende abzuschrauben, bis dieser den zylindrischen Mittelteil des Stifts erreicht hat, so daß beim Anbringen des Stifts in der Wand, die Klemmbuchse die Montagearbeiten nicht behindert und weiter nicht von dem Stift herunterfallen und verlorengehen kann. Eine attraktive Ergänzung dazu ist in Anspruch 5 beschrieben. Andererseits ist die Schelle mit den Schlitzlöchern in den Lippen an den Enden der schalenförmigen Zungen derartig ausgestaltet, daß sie, nach der Montage um das Rohr, während des Schließens über den Mittelteil des Stifts angebracht werden kann, um daraufhin mit ihren Lippen zu dem Kopf des Stifts hin verschoben zu werden, so daß die Schelle in dieser Lage auf dem Stift in geschlossener Position gezwungen ist sitzen zu bleiben, dies Dank der Schlitzlöcher, die mit ihrer Schlitzöffnung hinter dem Gewinde an dem Stift festgehalten werden. In dieser Position kann der Monteur die Schelle und oft auch das Rohr loslassen, so daß er bequem die Möglichkeit hat, die Klemmbuchse, die sich bereits an dem Stift befindet, auf das Gewinde in Richtung des Kopfes hin festzuschrauben. Somit umschließt die Klemmbuchse die beiden Zungen der Schelle, wodurch die Schelle an dem Stift festgesetzt wird. Aus dem Vorstehenden geht hervor, daß die Montage im Vergleich zu den bekannten Befestigungsvorrichtungen erleichtert wird, weil es keine anderen losen Teile gibt als den Stift mit Zubehör und die Schelle. (MERKE: Zur Vereinfachung wird die Grundkonstruktion immer Wand genannt).

Auch für den Hersteller der Befestigungsvorrichtungen und für den Lieferanten ist es eine weitaus einfachere Zulieferung geworden, weil jede zu liefernde Befestigungsvorrichtung nur aus zwei Einzelteilen besteht, nämlich dem Stift mit der Klemmbuchse und der Schelle. Nach bevorzugten Ausführungsformen kann die Vormontage des zuzuliefernden Stifts weiter noch mit einem Dübel versehen sein, wenn der Stift in einem vorgebohrten Loch, zum Beispiel in einer Betonwand, befestigt werden soll.

Eine Vorzugsausführungsform des Stifts besteht daraus, daß Dieser ein Stift des Schlagtyps ist, dessen Einschlagsende mit einem sägezahnförmigen Gewinde versehen ist, mit einem Zahn-Spitzen- Durchmesser, der höchstens mit dem Kerndurchmesser des Gewindes übereinstimmt, und daß der Kopf zum Einschlagen geeignet ist, und weiter mit einen kreuzschlitzförmigen Hohlraum oder ähnlichem versehen ist. Für die schnelle Montage kann somit der Stift in einen Holzbalken oder in einen Dübel in einer Steinmauer eingeschlagen werden, annäherungsweise bis in die gewünschte Tiefe. Dies ist Dank der Sägezahnform an dem Einschlagende des Stifts möglich. Weil die Sägezahnform zu einem Gewinde gehört, ist es möglich, den Stift auch mittels des kreuzschlitzförmigen Hohlraums oder ähnlichem an der Einschlagsseite des Kopfs hinein-oder herauszuschrauben. Korrekturen der Einschlagstiefe nach dem Einschlagen können somit bequem vorgenommen werden.

Eine weitere Vorzugsausführungsform besteht daraus, daß in der Schelle, radial gegenüber dem Stift, eine Schwächung wie Schlitze oder ein Gelenk angebracht worden ist, um als eindeutige Biegestelle während der Montage der Schelle um das Rohr zu dienen. Damit wird erreicht, daß, nach dem Aufbiegen der Schelle, die beiden umgesetzten Lippen am Ende der Zungen wieder in ihre gegenseitig richtige Position kommen, so daß die Schelle mittels der Schlitzlöcher bequem um den Stift und das Gewinde nahe dem Stiftkopf angebracht werden kann.

Andere Vorzugsausführungsformen werden in der Figurenbeschreibung und in den Unteransprüchen beschrieben und erläutert.

Wie oben bereits ausgeführt worden ist, bietet die erfindungsgemäße Befestigungsvorrichtung dem Hersteller der Befestigungsvorrichtung und dem Zulieferer die Möglichkeit, derartige Vormontagen zu liefern, daß diese an der Baustelle nicht nur leicht verarbeitungsfähig sind, sondern auch den Umgang damit sowie die Ueberwachung und das Vermeiden des Verlorengehens loser Teile erheblich vereinfachen. In allen Fällen gibt es nur zwei Teile, nämlich die Schelle und den Stift. Letzterer ist immer mit der vormontierten Klemmbuchse versehen und kann mit einem beliebigen Befestigungsende versehen sein, wie beispielsweise mit einem Schlaggewinde. Weiter kann der Stift mit einem bereits teilweise vormontierten Spreizdübel für die Montage in einem vorgebohrten Loch in beispielsweise einer Steinkonstruktion versehen sein.

Schließlich kann noch auf die Möglichkeit hingewiesen werden, bei vollständig montiertem Rohr, den Abstand zu der Wand zu ändern. Dazu wird die Klemmbuchse einigermaßen gelöst und mit einer Zange oder einem ähnlichen Werkzeug wird der Schlagstift über seinen zylindrischen Mittelteil verdreht, woraufhin die Klemmbuchse wieder festgesetzt wird. In bekannter Weise könnte der Stift zu diesem Zweck mit einem gesonderten sechskant versehen sein, dies unter der Voraussetzung jedoch, daß dieser Sechskant keinen größeren Schräg-Durchmesser hat als den Außendurchmesser des zylindrischen Mittelteils des Stifts.

Weil mittels der Klemmbuchse die Lippen am Ende der Zungen der Schelle an die Rückseite des Kopfes des Stifts angeschraubt werden, ist der axiale Einschluß der Schelle gegenüber dem Stift eindeutig und ohne Spiel festgelegt.

Die Erfindung wird näher an Hand der nachfolgenden Figuren dargelegt werden.

Figur 1a und 1b zeigen eine erfindungsgemäße Befestigungsvorrichtung für Rohre, teilweise in Schnitt und in zwei Vormontagen aufgegliedert.

Figur 2 zeigt eine Unteransicht der Schellen gemäß dem Pfeil II von Figur 1b.

Figur 3 zeigt einen Schnitt durch den Stift und eine Ansicht der beiden Lippen der Schelle in einer gegenseitigen Position, gerade vor der Montage der Schelle um den Stift oder nach der Demontage des Stifts.

Figur 4 zeigt eine Ansicht der Einschlagsseite des Stifts, mit Blick auf den Kopf.

Figur 5 zeigt die Befestigungsvorrichtung während der Montage an einer Steinwand.

Figur 6 zeigt, zum Teil im Schnitt, die endgültig befestigte Befestigungsvorrichtung.

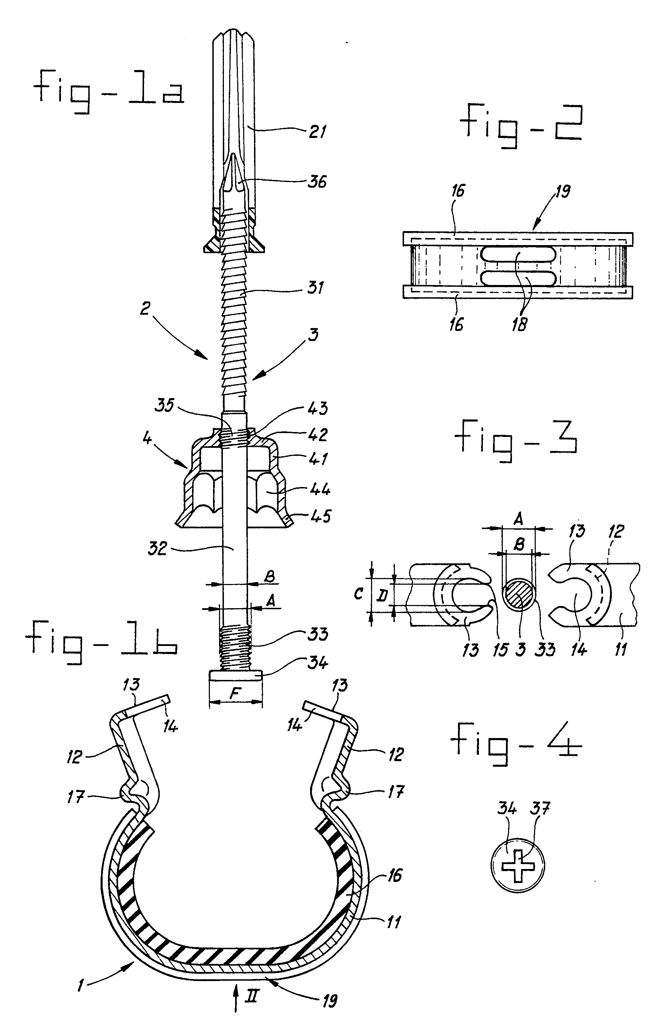

In Figur 1a bzw. 1b sind der Stift 3 der Befestigungsvorrichtung und die Klemmbuchse 4 bzw. die Schelle 1 dargestellt. Der dargestellte Stift 3 ist ein Stift des Einschlagtyps und dazu ist das wandseitige Ende mit einer Spitze 36 und einem sägezahnförmigen Einschlagsgewinde 31 versehen. Weiter wird der Stift durch ein Mittelteil 32 mit zylindrischem Querschnitt gebildet, welches Mittelteil 32 in der in Fig. 1a dargestellten Ausführungsform glatt ausgeführt ist. Nahe dem Anschluß des Mittelteils in dem Wandteil ist das Mittelteil mit einigen Gewindegängen 35 versehen. Am ande ren Ende ist der Stift 3 mit einem Kopf 34 und einem Gewinde 33 versehen. Letzteres Gewinde 33 erstreckt sich vorzugsweise über eine Länge von etwa dem zwei- bis dreifachen Durchmesser des Stifts. Die Gewinde 33 und 35 sind vollständig identisch, abgesehen von ihrer jeweiligen Länge.

Weiter ist in Figur 1a ein Spreizdübel 21 dargestellt der gerade so weit auf den spitzen Teil des Stifts aufgeschoben ist, daß der Spreizdübel noch nicht expandiert ist, wohl aber unverlierbar auf dem Stift 3 befestigt ist. Es ist anzumerken, daß der dargestellte Schlagstift auch ohne Spreizdübel brauchbar ist, wenn er beispielsweise in einer Holzwand befestigt werden muß. Die Anwendung eines Spreizdübels ist ganz besonders geeignet zur Anwendung in steinernen Wänden, in denen ein Loch vorgebohrt worden ist, dessen Durchmesser in etwa mit dem Außendurchmesser des Spreizdübels 21 übereinstimmt.

Weiter ist in Figur 1 a eine Klemmbuchse 4 im Schnitt dargestellt, die aus einem im wesentlichen zylindrischen Teil 41 besteht. Dieser Teil wird von einem Boden 42 geschlossen, in dem eine zentrale Bohrung angebracht ist, mit Innengewinde 43 versehen. Dieses Gewinde ist zur Zusammenarbeit mit den Gewinden 33 und 35 an dem Stift 3 bestimmt und geeignet. Zur offenen Seite der Klemmbuchse hin geht der zylindrische Teil 41 in einen Außensechskant 44 über und die Klemmbuchse endet mit einem konisch auskragenden Rand 45. Die Klemmbuchse 4 wird in der in Figur 1a dargestellten Position gegenüber dem Stift 3 angewendet. Weiter unten wird erläutert, weshalb die Klemmbuchse 4 in Figur 1a in einer auf dem Gewinde 35 festgeschraubten Position dargestellt worden ist.

Der Kopf 34 des Stifts ist dazu geeignet, mit einem Hammer oder einem ähnlichen Werkzeug in eine Wand hineingeschlagen zu werden. Dank dem sägezahnförmigen Einschlagsgewinde 31 ist eine dauerhafte Befestigung gewährleistet. Dadurch aber, daß die Sägezähne 31 gewindelinienförmig verlaufen, ist es möglich, den stift erforderlichenfalls auch in die Wand bzw. den Dübel hinein- oder daraus herauszuschrauben. Dies kann insbesondere vorteilhaft angewendet werden, wenn der Stift annäherungsweise bis in die richtige Tiefe in die Wand eingeschlagen worden ist und dann auf die genaue Tiefe gebracht werden kann, indem mittels des Gewindes 31 der Stift ein wenig weiter hinein- oder ein wenig herausgeschraubt wird. Zu diesem Zweck ist nach Figur 4 die Schlagseite des Kopfes mit einer profilierten Vertiefung versehen, die zum Eingreifen von Schraubwerkzeug geeignet ist. Dargestellt ist zu diesem Zweck die bekannte sternförmige Schlitzform des Philips- oder Pozydrive-Typs. Selbstverständlich können auch andere Mitnehmer-Öffnungen vorgesehen sein, wie ein Innensechskant.

Damit die Klemmbuchse 4 auf den Stift aufgebracht werden kann, soll der Spitzendurchmesser des sägezahnförmigen Gewindes 31 identisch sein mit oder etwas kleiner sein als der Innenspitzendurchmesser des Gewindes 43 in der Klemmbuchse 44. Weiter wird die Klemmbuchse auf dem glatten zylindrischen Mittelteil 32 des Stifts verschoben werden können, was bedeutet, daß der Außendurchmesser B des glatten Mittelteils 32 des Stifts übereinstimmen muß mit oder etwas kleiner sein muß als der Kerndurchmesser der Gewindegänge 33 und 35.

Es wird darauf hingewiesen, daß im Gegensatz zu vielen bekannten Befestigungsvorrichtungen für Rohre die Stifte nach der Erfindung einen fest damit verbundenen integralen Kopf 34 aufweisen. Dieser Kopf kann nicht verlorengehen, sich nicht lösen und kann darüber hinaus erheblich geringere Abmessungen aufweisen als auf irgendeine beliebige Weise zu befestigende lose Köpfe.

Schließlich kann noch angemerkt werden, daß der Stift erwünschtenfalls an dem zylindrischen glatten Mittelteil 32 mit beispielsweise einem Sechskant versehen sein kann, an dem ein Schlüssel angreifen kann, um den Stift hinein- oder herauszuschrauben. Dies kann von Bedeutung sein, falls die Befestigungsvorrichtung nach der Montage des Rohrs noch hinein oder herausgeschraubt werden muß. Der Schrägdurchmesser dieses Sechskants darf nicht größer als der Außendurchmesser B des glatten Mittelteils des Stifts 32 sein. Falls jedoch eventuell hinein- oder herausschrauben des Stifts nach der Montage des Rohrs nur ausnahmsweise vorkommen wird, kann selbstverständlich ein glattes Mittelteil 32 des Stifts ausreichen, das dann mit einer geeigneten Zange verdreht werden kann.

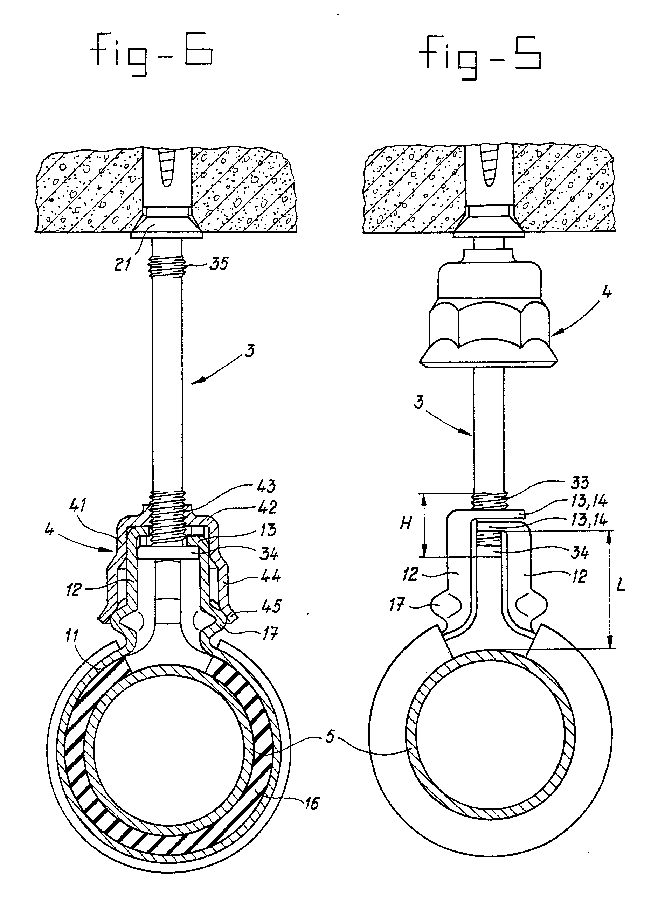

In Figur 1b ist die insgesamt mit 1 bezeichnete Schelle im Schnitt dargestellt. Diese Schelle 1 besteht aus der eigentlichen metallenen Schelle 11, die im Gebrauchsstand kreisförmig gebogen ist, wie die Figuren 5 und 6 zeigen, um ein Rohr 5. Mit 16 ist eine Verkleidung der Schelle dargestellt, die beispielsweise aus weichem Gummi hergestellt sein kann und die vor allem innenseitig mit Rippen versehen sein kann, um eine elastische, federnde Umschließung des Rohrs zu ermöglichen. Die Verkleidung bezweckt vor allem die Schallisolierung des durch das fließende Medium in dem Rohr 5 erzeugten Schalls, damit dieser Schall nicht über die Schelle und den Stift in das gebäude vordringen kann, deren Bestandteil die Wand ist. Die Verkleidung 16 kann weiter auch eine thermische Isolationsfunktion erfüllen. In bekannter Weise ist die Verkleidung 16 mit nicht näher umschriebenen Lippen um die Ränder der Schelle festgesetzt, wie auch Figur 2 zeigt. Beim offenen Ende der Schelle ist Diese in bekannter Weise umgesetzt, um zwei schalenförmige Zungen 12 zu bilden, die in dem montierten Zustand nach Figur 5 und 6 parallel zueinander laufen und auch parallel zur Achslinie der gesamten Befestigungsvorrichtung. Jede schalenförmige Zunge 12 ist an ihrem freien Ende mit einer um $90°$ umgesetzte Lippe 13 versehen, wobei diese Lippen in montiertem Zustand in Ebenen senkrecht zur Achslinie der Vorrichtung verlaufen.

In Figur 1b ist die Schelle in so weit geöffneter Position dargestellt, daß sie um das Rohr 5 (in den Figuren 5 und 6) montiert werden könnte, um danach wieder um das Rohr 5 dichtgebogen zu werden. Zu diesem Zweck ist in dem Bereich des Pfeils 19 (Siehe auch Figur 2) die Schelle mit stellenweise einem weitaus größeren Krümmungsradius als an den sonstigen Teilen der Schelle abgebildet. Dies wird dadurch erreicht, wie Figur 2 zeigt, daß dort Schwächungen angebracht worden sind, wie beispielsweise zwei Schlitze 18, die als eindeutige Biegestrecken wirksam sind. Es ist auch möglich, an der Stelle ein an sich bekanntes Scharnier in der Schelle anzubringen. Diese Konstruktion bezweckt nicht nur, die Öffnung der Schelle, die Anbringung der Schelle um das Rohr und die anschließende Schließung der Schelle zu erleichtern, sondern vor allem auch dies alles zu einer eindeutigen Handlung zu machen, damit nach Ablauf der vorgenannten Handlungen die beiden Lippen wieder übereinander und aufeinander zu liegen kommen. Dies ist deutlich in den Figuren 5 und 6 zu sehen. In Figur 3, in Kombination mit 1 b ist ein Detail der (in den Figuren) Draufsicht der beiden Lippen 13 der Schelle 1 dargestellt. Diese sind in gegenseitiger Position dargestellt, kurz vor dem vollständigen Schließen der Schelle, wobei die beiden Lippen 13 genau übereinander gelegen sind. Wie aus den Figuren 5 und 6 hervorgeht, sollen die Lippen von beiden Seiten um den Stift angebracht werden. Zu diesem Zweck ist ein Schnitt des Stifts in Figur 3 ebenfalls dargestellt. Jede Lippe ist zu diesem Zweck mit einem Schlitzloch 14, 15 versehen, dessen kreisförmiger Teil 14 in Richtung des Stifts 3 mit einer Öffnung 15 geöffnet ist. Dabei müssen die Öffnungen 15 um den glatten zylindrischen Teil 32 des Stifts angebracht werden können, so daß die Breite D der Öffnungen 15 wenigstens mit dem Durchmesser B des glatten zylindrischen Teils 32 des Stifts übereinstimmt. Nachdem die Schelle vollständig geschlossen worden ist, fallen die beiden Öffnungen 14 genau übereinander und liegen mit ihrem jeweiligen Mittelpunkt auf der Achslinie des Stifts, so daß es daraufhin möglich ist, die Schelle (in den Figuren) nach unten zu verstellen, so daß der Teil des Stifts mit dem Gewinde 33 in die Schlitzlöcher 14 fällt. Dabei kann die Schelle so weit verschoben werden, daß die Innenseite der Lippen 13 an die Rückseite des Kopfs 34 anliegen wird. Um dies zu ermöglichen, muß der Durchmesser C der Schlitzlöcher 14 wenigstens mit dem Außendurchmesser A des Gewindes 33 übereinstimmen. Dadurch aber, daß die Öffnungen 15 eine geringere Breite D haben, kann der Gewindeteil 33 nicht mehr durch die Öffnungen 15 hindurchpassieren. Dadurch ist die Schelle in der geschlossenen Stellung an der Stelle des Gewindes 33 am Ende des Stifts 3 eingeschlossen. In dieser Position kann die Schelle vom Monteur losgelassen werden, weil sie zeitweilig an dem Stift verriegelt ist. Wie aus Figur 5 und 6 deutlich hervorgeht, ist die eine schalenförmige Zunge 12 gerade so viel länger als die andere, daß die eine Lippe 13 in der zusammengekniffenen Stellung der Schelle genau über bzw. unter die andere fällt.

Aus dem Vorstehenden geht hervor, daß zwecks Zusammenarbeit zwischen dem Stift und der Schelle es erforderlich ist, daß der Durchmesser F des Kopfes 34 des Stifts 3 einen derartigen Durchmesser nicht übersteigt, daß er mit ein wenig Spiel zwischen die beiden schalenförmigen Zungen 12 der Schelle paßt, wenn diese sich in der montierten position befinden, wie insbesondere aus der Figur 6 hervorgeht.

In Figur 5 ist die oben beschriebene Position wiedergegeben, bei der die Schelle um das Rohr 5 montiert ist und auch bereits an dem Gewinde 33 des Stifts 3 verriegelt ist. Die Länge der schalenförmigen Zungen 12 der Schelle soll dabei derart sein, daß der Abstand L zwischen der Innenfläche der inneren Lippen 13 und der nächstgelegenen Fläche des Rohrs 5 größer als der Abstand H zwischen der Schlagfläche des Kopfes 34 und dem wandseitigen Ende des Gewindes 33 ist. Die Schelle ist mit seinen Lippen 13, 14 nur dann in der beschriebenen Weise auf den Stift zu montieren, wenn der genannten Bedingung $L > H$ genügt wird. Alsdann kann die Klemmbuchse 4 von den Gewindegängen 35 abgeschraubt werden, auf denen sie vorläufig montiert wurde und zu der Schelle verstellt werden, um auf das Gewinde 33 aufgeschraubt zu werden. Dabei berührt der konisch auskragende Randteil 45 der Klemmbuchse 4 kugelförmige Vorsprünge 17, die in der Mitte der schalenförmigen Zungen nahe deren Übergang in die eigentliche Schelle 11 angebracht sind. Die beiden kugelförmigen Vorsprünge 17 sind bei montierter Schelle in gleichen Radius vom Zentrum der Schelle entfernt. Dadurch wird die Klemmbuchse beim weiteren Aufschrauben gleichzeitig die beiden kugelförmigen Vorsprünge 17 berühren und diese aufeinander zu und gegebenenfalls auch herunter drücken, bis die Lippen 13 ohne Spiel an der Rückseite des Kopfes 34 des Stifts anliegen werden. Beim Festschrauben der Klemmbuchse wird diese die Vorsprünge 17 fest zueinanderdrücken, so daß die Schelle dadurch im wesentlichen unbeweglich gegenüber dem Stift befestigt ist. Es ist empfehlenswert, die Innenabmessungen der Klemmbuchse derartig auszuführen, daß der auskragende konische Rand 45 auf jeden Fall die beiden Vorsprünge 17 fest andrückt, bevor eventuell die Innenseite der geschlossenen Endfläche 42 der Klemmbuchse an die Lippe der längsten Zunge anliegen wird.

Sollte es sich als notwendig erweisen, nach der oben beschriebenen Montage und Befestigung der Schelle den Abstand zwischen dem Rohr und der Wand ändern zu müssen, so kann dies einfach geschehen, indem die Klemmbuchse ein wenig losgeschraubt wird und danach zum Beispiel mit einer Zange über den zylindrischen glatten Mittelteil 32 des Stifts, dieser nach Wunsch weiter hinein-oder herausgeschraubt wird. Danach kann dann die Klemmbuchse wieder festgesetzt werden.

In Ausnahmefällen kann es sinnvoll sein, beispielsweise zur Erleichterung der Montage der Schelle um das Rohr, daß der metallene Teil 11 der Schelle aus zwei Einzelteilen besteht. Die beiden Einzelteile könnten dabei miteinander durch die elastische Verkleidung 16 verbunden bleiben. Es wird klar sein, daß auch in dem Fall, dank des Einschließens der Lippen um den Stift und dank des Andrückens der beiden Schellenhälften über die Vorsprünge 17 durch die Klemmbuchse 4 trotzdem eine feste Aufhängung des Rohrs 5 möglich ist.

Weiter wird es klar sein, daß zum Umfang der Erfindung auch Vorrichtungen gehören, bei denen der Stift an seinem Befestigungsende an dem Träger zum beispiel glatt ist oder mit einem konischen Holzgewinde versehen ist, und dergleichen.

Mit Blick auf eine bequeme Zulieferung zur Baustelle hin und auf die Verarbeitung an Ort und Stelle, ist es vorteilhaft, Vormontagen zu liefern, wie diese in den Figuren 1a und 1b dargestellt sind. Dabei kann die Klemmbuchse 4 bereits auf den Gewindegängen 35 montiert sein und kann ein Spreizdübel gerade auf dem Einschlagsende des Stifts festgesetzt sein. Die Schelle mit der Verkleidung bildet den anderen Teil, so daß der Monteur nur mit zwei Teilen zu hantieren braucht und keine anderen losen Teile vorkommen, die also auch nicht verloren gehen können.

**Ansprüche**

1. Befestigungsvorrichtung für Rohre und dergleichen, welche Vorrichtung besteht aus
- einer das zu befestigende Rohr (5) oder dergleichen aufnehmende Schelle (1), deren beiden umgesetzten Enden in Form schalenförmiger Zungen (12) sich im wesentlichen Parallel zueinander in radialer Richtung gegenüber der Schelle erstrekken, wobei das Ende jeder Zunge mit einem Einschlußmittel (13, 14) versehen ist;
- einem mit dem einen Ende in der Grundkonstruktion, wie einer Wand oder einer Decke, zu befestigenden Stift, dessen anderes Ende mit Gewinde (33) und mit einer mit den Einschlußmitteln an den Zungen zusammenwirkenden Verdickung (34) versehen ist, und
- einer im wesentlichen zylindrischen Klemmbuchse (4), die über die mit ihrem Einschlußmittel an die Verdickung anliegenden Zungen (12) mit einigem Spiel aufsetzbar ist, dadurch gekennzeichnet,
- daß der Stift (3) zwischen dem in der Wand zu befestigenden Teil (31) und dem anderen mit Gewinde (33) versehenen Ende einen zylindrischen Mittelteil aufweist, dessen Durchmesser (B) gleich oder kleiner ist als der Kerndurchmesser des Gewindes,
- daß die Verdickung an dem gewindeseitigen Ende des Stifts durch einen mit dem Stift integralen Kopf (34) gebildet wird, der mit einem gewissen Spiel zwischen die beiden schalenförmigen Zungen paßt,
- daß die Klemmbuchse (4) wandseitig ein geschlossenes Ende (42) mit einer zentralen Bohrung aufweist, in der mit dem Gewinde-Ende (33) des Stifts übereinstimmendes Gewinde (43) vorgesehen ist, und
- daß das Einschlußmittel am Ende jeder Zunge (12) aus einer der anderen Zunge zugewandten, in einer senkrecht zu der Achslinie der gesamten Vorrichtung stehenden Ebene gelegenen umgesetzten Lippe (13) besteht, deren Außenumfang ein wenig kleiner als der Innendurchmesser der Klemmbuchse (4) ist und in der ein derartiges Schlitzloch (14, 15) angebracht worden ist, daß das Zentrum des Teils (14) mit dem größeren Durchmesser (C) mit der Achslinie zusammenfällt und einen Durchmesser (C) hat, der etwas größer als der Außendurchmesser (A) des Gewindes (33) ist, und wobei für die Breite (D) der Schlitzöffnung (15) gilt B < D < A und daß diese Schlitz-Öffnung (15) der entsprechenden Zunge abgewandt verläuft.

2. Befestigungsvorrichtung nach Anspruch 1, dadurch gekennzeichnet, daß der Kopf (34) des Stifts einen Durchmesser (F) hat, der größer als der Durchmesser (C) der Schlitzlöcher ist (F > C).

3. Befestigungsvorrichtung nach einem oder mehreren der vorstehenden Ansprüche, dadurch gekennzeichnet, daß die Länge der einen Zunge (12) so viel länger als die der anderen Zunge ist, daß die eine umgesetzte Lippe (13) gerade über die andere fällt.

4. Befestigungsvorrichtung nach einem oder mehreren der vorstehenden Ansprüche, dadurch gekennzeichnet, daß die Länge (L) zwischen der rohrseitigen Fläche der innern umgesetzten Lippe und dem Rohr (5) größer als der Abstand (H) zwischen dem freien Ende des Kopfes (34) und dem Ende des Gewindes (33) an dem Stift ist (L > H).

5. Befestigungsvorrichtung nach einem oder mehreren der vorstehenden Ansprüche, dadurch gekennzeichnet, daß ebenfalls an dem wandseitigen Ende des Mittelteiles (32) des Stifts (3) ein kurzes Stück mit demselben Gewinde (35) versehen ist, wie an dem kopfseitigen Ende des Stifts angebracht ist, so daß während des Anbringens des Stifts in der Wand und während der Montage der Schelle um das Rohr und an dem Stift, die Klemmbuchse zeitweilig an dieser festen entfernten Stelle lagerbar ist (Figur 1a, 5).

6. Befestigungsvorrichtung nach einem oder mehreren der vorstehenden Ansprüche, dadurch gekennzeichnet, daß der Stift (3) ein Stift des Schlagtyps ist, dessen Einschlagsende mit einem sägezahnförmigen Gewinde (31) versehen ist, mit einem Zahn-Spitzen-Durchmesser, der höchstens mit dem Kerndurchmesser (B) des Gewindes übereinstimmt, und daß der Kopf (34) zum Einschlagen geeignet ist, und weiter mit einem kreuzschlitzförmigen Hohlraum (37) oder ähnlichem versehen ist, um den Stift, nach dem Hineinschlagen, durch Verdrehen genau in gewünschter Tiefe in der Wand einstellbar zu machen.

7. Befestigungsvorrichtung nach einem oder mehreren der vorstehenden Ansprüche, dadurch gekennzeichnet, daß die Klemmbuchse (4) an dem im wesentlichen zylindrischen Teil (41) mit einem Außensechskant (44) versehen ist.

8. Befestigungsvorrichtung nach einem oder mehreren der vorstehenden Ansprüche, dadurch gekennzeichnet, daß das offene Ende der Klemmbuchse konisch (45) auskragend ist,. und daß an jeder der schalenförmigen Zungen in einer Ebene, durch die Mitte der Schelle und senkrecht zu der Rohrachslinie verlaufend, nahe dem Übergang der Zungen in die eigentliche Schelle ein kugelförmiger Vorsprung (17) in gleicher Entfernung zur Mitte der Schelle hin, geeignet für die Zusammenarbeit mit der auskragenden inneren Endfläche (45) der Klemmbuchse (4) angebracht ist, dies alles in der Weise, daß mit der Endfläche der Klemmbuchse während des Festschraubens die Zungen über die Vorsprünge fest zueinandergedrückt werden können, bevor das geschlossene Ende (42) der Klemmbuchse an den umgesetzten Lippen (13) anlaufen würde.

9. Befestigungsvorrichtung nach einem oder mehreren der vorstehenden Ansprüche, dadurch gekennzeichnet, daß in der Schelle, radial gegenüber dem Stift, eine Schwächung, wie beispielsweise Schlitze (18) oder ein Scharnier angebracht ist, welche Schwächung als eindeutige Biegestelle (19) während der Montage der Schelle um das Rohr vorgesehen ist, damit nachher die beiden umgesetzten Lippen am Ende der Zungen wieder in die richtige Position zueinander gebracht werden können.

10. Vormontage einer kompletten Befestigungsvorrichtung nach einem oder mehreren der vorstehenden Ansprüche, dadurch gekennzeichnet, daß diese Vorrichtung lediglich aus den beiden nachfolgenden Teilen (1, 2) besteht:
- der Schelle (1);
- dem Schlagstift (2) mit auf den Gewindegängen (35) nahe dem wandseitigen Ende des Stifts (3) montierter Klemmbuchse (4).

11. Vormontage nach Anspruch 10 und geeignet für die Montage in einem vorgebohrten Loch, dadurch gekennzeichnet, daß von den beiden Einzelteilen (1, 2), aus denen sich diese Schelle zusammensetzt, der Schlagstift (3) ebenfalls einen auf das Einschlagsende über nur einen geringen Teil der gesamten Einschlagtiefe aufgeschobenen Spreizdübel (21) umfaßt.

12. Vormontage (2) eines Stifts, der für eine Befestigungsvorrichtung für Rohre nach einem der Ansprüche 1-9 geeignet ist, dadurch gekennzeichnet, daß diese von dem Stift (3) mit dem auf den nahe der Wandseite vorhandenen Gewindegängen (35) montierter Klemmbuchse (4) gebildet wird.

13. Vormontage (2) nach Anspruch 12 und geeignet für die Montage in einem vorgebohrten Loch in einer Wand, dadurch gekennzeichnet, daß ebenfalls an dem wandseitigen Ende des Stifts (3) auf nur einen geringen Abschnitt der gesamten Montagetiefe ein Spreizdübel (21) aufgeschoben worden ist.

fig-1a

21

36

31

2

3

fig-2

16    19

16    18

35    43
4     42
41
44
45

32

fig-3

B
A

A
B

13    12

C    D

13  15  3  33  14  11

fig-1b

33

34
F

13    13
14    14
12    12
17    17

fig-4

34  37

16
11

1
II
19

# fig-6

# fig-5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-2 746 562 (HILTI AG)<br>* Figuren *<br>--- | 1,7 | F 16 L 3/133 |
| A,D | US-A-4 306 696 (PONDMAN)<br>* Figuren *<br>--- | 1 | |
| A | GB-A-2 200 401 (M. GREENWAY & SON LTD)<br>* Figuren *<br>--- | 1 | |
| A | NL-A-7 411 759 (FLAMCO BV)<br>* Figuren *<br>----- | 1,6 | |
| | | | **RECHERCHIERTE SACHGEBIETE (Int. Cl.5)**<br><br>F 16 L |

Der vorliegende Recherchenbericht wurde für alle Patentansprüche erstellt

| Recherchenort | Abschlußdatum der Recherche | Prüfer |
|---|---|---|
| DEN HAAG | 29-03-1990 | BARTSCH A.W. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument